# EUROPÄISCHE PATENTSCHRIFT

(11) **EP 1 475 219 B1**
(45) Veröffentlichungstag und Bekanntmachung des Hinweises auf die Patenterteilung: **30.07.2008**
(21) Anmeldenummer: 04010680.9
(22) Anmeldetag: 05.05.2004
(51) Int. Cl.: B29C 65/42, B29C 65/16

(54) **Laserstrahlbearbeitungsvorrichtung zum Fügen von Kunststoffen mit einem Zusatzwerkstoff**
Tool provided with a laserbeam for joining synthetic materials by the use of a filler material
Outil pourvu d'un rayon laser pour la liaison de matières synthétiques moyenant une matière d'apport

(30) Priorität: 05.05.2003 DE 10320096
(43) Veröffentlichungstag der Anmeldung: 10.11.2004
(73) Patentinhaber: ProLas GmbH, 52146 Würselen (DE)
(72) Erfinder: Ebert, Thomas, Dr., 52072 Aachen (DE); Hänsch, Dirk, Dr., 52070 Aachen (DE)
(74) Vertreter: Paul, Dieter-Alfred

(56) Entgegenhaltungen:
- EP-A- 0 828 581
- WO-A-96/01738
- DE-A- 10 257 112
- DE-A- 19 716 757
- DE-A- 19 817 629
- US-A- 4 906 812
- PATENT ABSTRACTS OF JAPAN Bd. 2003, Nr. 11, 5. November 2003 (2003-11-05) & JP 2003 205550 A (YOSHIKAWA JUICHI), 22. Juli 2003 (2003-07-22)
- PATENT ABSTRACTS OF JAPAN Bd. 2002, Nr. 02, 2. April 2002 (2002-04-02) & JP 2001 300722 A (IZUMI HIROYUKI), 30. Oktober 2001 (2001-10-30)
- PATENT ABSTRACTS OF JAPAN Bd. 2000, Nr. 26, 1. Juli 2002 (2002-07-01) & JP 2001 252762 A (JAPAN UNIX CO LTD), 18. September 2001 (2001-09-18) -& US 2003/127498 A1 (ABE SHIGERU) 10. Juli 2003 (2003-07-10) -& JP 2001 252762 A (JAPAN UNIX CO LTD) 18. September 2001 (2001-09-18)

## Beschreibung

Die vorliegende Erfindung betrifft eine Laserstrahlbearbeitungsvorrichtung mit den Merkmalen des Oberbegriffs des Anspruchs 1.

Aus der deutschen Patentschrift DE 19817629 C2 ist eine gattungsgemäße Laserbearbeitungsvorrichtung bekannt, die tragbar ausgeführt ist und die ein auf die zu verschweißende Werkstückoberfläche aufsetzbares Handgerät aufweist, in das über einen Lichtleiter Laserstrahlung von einem externen Laser eingekoppelt werden kann. Das Handgerät ist so eingerichtet, das es auf die Werkstückoberfläche aufgesetzt werden kann, worauf eine Umlenk- und Fokussierungsoptik innerhalb des Handgeräts entlang einer vorgesehenen Bearbeitungsbahn verfahren wird, ohne dass sich das Handgerät bewegt. Das gesteuerte Verfahren der Fokussierungsoptik stellt eine an Werkstoff und Laserleistung angepaßte Bearbeitungsgeschwindigkeit sicher. Während der Bearbeitung ist vorgesehen, einen Zusatzwerkstoff in Form eines Schweißdrahtes zuzuführen, wobei die Zuführgeschwindigkeit an die Bearbeitungsgeschwindigkeit angepasst ist.

Diese Vorrichtung ist zum Verschweißen von metallischen Werkstoffen in einer vorgegebenen, nahezu ebenen Geometrie vorgesehen. Sie ist nicht geeignet, durchgehende Fugeverbindungen mit komplexen Bearbeitungsbahnen zu erstellen.

In der Deutschen Patentanmeldung 10257112.0, die auf die selben Anmelder zurückgeht, ist eine tragbare Laserstrahlbearbeitungsvorrichtung beschrieben, bei der der fokussierte Laserstrahl zum Verschweißen von Kunststoffen manuell entlang einer nahezu beliebigen Bearbeitungsbahn geführt werden kann. Es ist nicht vorgesehen, einen Zusatzwerkstoff zuzuführen.

Aus der japanischen Patentanmeldung JP 2003205550 wird ein Kunstharzschweißwerkzeug, das mit einer Laserstrahlmaschine ausgebildet ist, beschrieben. Das Kunstharz wird dabei mit einem Laser verflüssigt und mit einer Walze in die gewünschte Form und Position gebracht. Diese Vorrichtung ist damit zum Verschweißen von Werkstoffen in einer vorgegebenen nahezu ebenen Geometrie vorgesehen. Sie ist nicht geeignet, durchgehende Fugeverbindungen mit komplexen Bearbeitungsbahnen zu erstellen.

Die japanische Patentanmeldung JP 2001300722 beschreibt einen Handlötkolben mit Halbleiterlaser, bei dem ein automatisch seitlich zugeführter Lötdraht im Konvergenzpunkt eines über einen konkaven Spiegel zugeführten Laserstrahls geschmolzen wird.

Diese Vorrichtung ist zum verschweißen von metallischen Werkstoffen vorgesehen, die im Gerät selber automatisch zugeführt und von dem Laser vollständig geschmolzen werden. Die Verwendung von auswechselbaren Spitzen zur verarbeitung unterschiedlicher Werkstoffe ist nicht vorgesehen.

Schließlich sind aus der Praxis Folienschweißgeräte bekannt, die mit Heißluft arbeiten und bei denen optional ein Zusatzwerkstoff in Form eines Kunststoffdrahtes zugeführt werden kann. Diese Geräte werden beispielsweise von der Firma Leister Process Technologies, CH-6060 Sarnen (Schweiz) angeboten. Heißluftgeräte erreichen jedoch in der Praxis nicht die Bearbeitungsgeschwindigkeit und die Prozesssicherheit, wie sie mit Laserstrahlbearbeitungsvorrichtungen erzielbar sind.

Es ist deshalb Aufgabe der vorliegenden Erfindung, ein manuell geführtes Gerät zur Laserstrahlbearbeitung zu schaffen, bei dem ein Zusatzwerkstoff zugeführt werden kann. Weiter ist es Aufgabe der Erfindung diesen Zusatzwerkstoff zu schaffen.

Diese Aufgabe wird von einer Vorrichtung mit den Merkmalen des Anspruchs 1 und einem Werkstoff mit den Merkmalen des Anspruchs 15 gelöst.

Weil das Gehäuse auf der dem Fügebereich zugewandten Seite eine auswechselbare Arbeitsspitze trägt, die eine Austrittsöffnung für die Laserstrahlung aufweist, und die Zuführung in die Arbeitsspitze integriert ist, kann die Vorrichtung zum Fügen von Werkstücken mit komplexer Geometrie genutzt werden, bei denen eine manuelle Führung des Handgeräts und der Einsatz eines Zusatzwerkstoffs erforderlich sind.

Besonders leicht und einfach wird die Vorrichtung, wenn die Zuführung keinen selbsttätigen Vorschub für den Zusatzwerkstoff aufweist. Dabei kann eine Regelung der Laserleistung in Abhängigkeit von der Temperatur der Kontaktfläche vorgesehen sein. Die Nachspeisung des Zusatzwerkstoffs erfolgt bevorzugt durch Adhäsion an dem Werkstück einerseits und durch manuellen Zug an dem Handgerät andererseits.

Es kann auch ein automatischer Vorschub des Zusatzwerkstoffs vorgesehen sein, der vorzugsweise über die Temperatur der Kontaktfläche geregelt ist.

Der Zusatzwerkstoff kann ein Kunststoffdraht sein, der derart im Bereich der Laserwellenlänge (üblicherweise im Infrarotbereich) absorbierend ausgestattet ist, dass bei einer Beaufschlagung mit Laserstrahlung von einer Seite her eine Absorption von 80% der Laserstrahlung in der dem Laserstrahl zugewandten Hälfte des Kunststoffdrahtes erfolgt. So ist sichergestellt, dass einerseits die Kontaktfläche zum Werkstück erweicht bzw. aufgeschmolzen wird und andererseits der Zusatzwerkstoff nahezu formstabil bleibt, insbesondere in Längsrichtung.

Der Zusatzwerkstoff kann auf die Oberfläche der Werkstücke aufgebracht werden, wenn die mit der Laserstrahlung beaufschlagte Seite des Zusatzwerkstoffs im Betrieb dem zu fügenden Werkstück zugewandt ist und dort wenigstens eine Kontaktfläche bildet. Hierzu ist es vorteilhaft, wenn der Zusatzwerkstoff im Bereich der Kontaktfläche nach Art eines Heißklebers aufgeschmolzen wird, während der abgewandte Bereich zugfest bleibt.

Verschiedene Werkstoffe und verschiedene Geometrien können mit der Vorrichtung verarbeitet werden, wenn die Arbeitsspitze eine Codierung aufweist, die einem geeigneten Sensormittel an dem Handgerät eine Information über die Art der Arbeitsspitze und/oder die Art des Zusatzwerkstoffs verfügbar macht. Die Information kann dann an eine Steuerung abgegeben werden, die die Solltemperaturbereiche für den Werkstoff im Betrieb regelt.

Ein einfacher Aufbau ergibt sich, wenn die Arbeitsspitze zugleich als Abschirmung der Laserstrahlung gegenüber der Umwelt wirkt. Die Handhabung wird vereinfacht, wenn in den Laserstrahl ein auf den Fügebereich ausgerichteter sichtbarer Pointer so eingemischt ist, dass die Position des an sich unsichtbaren Laserstrahls visualisiert wird.

Ein Zusatzwerkstoff zum Fügen von Kunststoffen mittels Laserstrahlung weist erfindungsgemäß folgenden Merkmale auf:
der Werkstoff ist drahtförmig aus einem schmelzbaren Kunststoff gefertigt;
der Werkstoff weist eine Infrarot absorbierende Pigmentierung auf, die derart eingerichtet ist, dass eine Halbwertslänge der Absorption höchstens einem Drittel der Dicke des Werkstoffs entspricht.

Vorteilhaft ist, wenn die Pigmentierung über den Querschnitt des Werkstoffs gleichmäßig verteilt ist, weil dann ein einfacher einkomponentiger Fertigungsprozess zur Herstellung des Werkstoffs genutzt werden kann. Der Werkstoff kann in Ecken eingesetzt werden, wenn der Querschnitt viertelkreisförmig ist.

Schließlich kann ein Laser mit einer Wellenlänge von 1,8 µm oder mehr in Zusammenwirkung mit einem Zusatzwerkstoff ohne zusätzliche Pigmentierung verwendet werden, wobei der Zusatzwerkstoff ein einkomponentiger Kunststoff ist.

Vorteilhafte Ausgestaltungen der Erfindung sind in dem Unteransprüchen dargestellt.

Ausführungsbeispiele der vorliegenden Erfindung sind nachfolgend anhand der Zeichnung beschrieben. Es zeigen:
- Fig. 1:: ein Handgerät mit Zuführung eines Kunststoffdrahtes in der Arbeitsspitze in einem Querschnitt von der Seite;
- Fig. 2:: eine Arbeitsspitze gem. Fig. 1 in einer detaillierteren Darstellung;
- Fig. 3:: eine andere Arbeitsspitze zur Verwendung mit dem Handgerät gemäß Figur 1 ohne automatischen Vorschub;
- Fig. 4:: einen Zusatzwerkstoff zur Verwendung mit der Vorrichtung nach Figur 1-3; sowie
- Fig. 5:: eine schematische Darstellung einer Fügeverbindung zwischen zwei Kunststoffplatten unter Verwendung des Werkstoffs gemäß Figur 4.

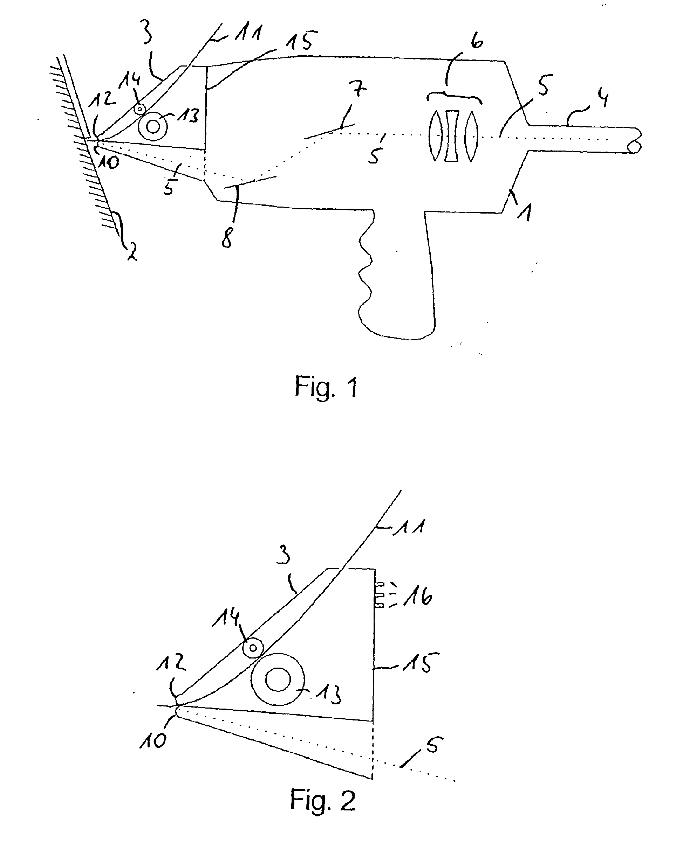

In der Figur 1 ist eine erfindungsgemäße Vorrichtung zum Fügen von Kunststoffen mit einem Zusatzwerkstoff dargestellt. Die Vorrichtung umfasst ein Handgerät 1, das an seiner einem Werkstück 2 zugewandten Seite einer Arbeitsspitze 3 trägt. Die gegenüberliegende Seite ist mit einem Lichtleiter 4 verbunden, aus dem ein Laserstrahl 5 in das Handgerät 1 eingekoppelt wird. Der Laserstrahl 5 wird durch eine nur schematisch dargestellte Optik 6 fokussiert und durch Spiegel 7, 8 umgelenkt und auf eine Öffnung 10 der Arbeitsspitze 3 gerichtet, aus der der Laserstrahl 5 in Richtung auf das Werkstück 2 austritt.

Die Arbeitsspitze 3 weist neben der Austrittsöffnung 10 für den Laserstrahl 5 noch eine Zuführung für einen drahtförmigen Zusatzwerkstoff 11 auf. Der Zusatzwerkstoff 11 wird innerhalb der Arbeitsspitze 3 so geführt, dass ein erstes Ende im Bereich der Austrittsöffnung 10 in den optischen Weg des Laserstrahls 5 gebracht werden kann. Hierfür sind in der Arbeitsspitze 3 Förderrollen 13 und 14 vorgesehen, die in Abhängigkeit von einer entsprechenden Steuerung und einem Antrieb dazu eingerichtet sind, den Zusatzwerkstoff 11 in Richtung auf die Öffnung 12 der Arbeitsspitze 3 zu fördern.

Die Arbeitsspitze 3 ist in einer Flanschebene 15 lösbar an dem Handgerät angeordnet. Sie ist als separates, auswechselbares Bauteil in verschiedenen Bauformen vorgesehen. Die Ausführungsform gemäß Figur 1 wird in der Figur 2 nachfolgend vergrößert veranschaulicht.

Die Figur 2 zeigt die Arbeitsspitze gemäß Figur 1 in einer vergrößerten Darstellung. Sie ist in dieser Darstellung von dem Handgerät 1 abgenommen.

In der Flanschebene 15 sind hier nur schematisch dargestellte Kontakte 16 angeordnet, die bei Verbindung der Arbeitsspitze 3 mit dem Handgerät 1 zum einen Informationen über die Art der Arbeitsspitze und gegebenenfalls des Zusatzwerkstoffs 11 an eine in dem Handgerät 1 oder im Gehäuse des externen Lasers (nicht dargestellt) angeordnete Steuerung übermittelt. Zum anderen können Messwerte aus der Arbeitsspitze 3 übermittelt werden. Schließlich können Steuerungssignale und eine Spannungsversorgung für die Vorschubrollen 13, 14 und deren Antrieb übertragen werden.

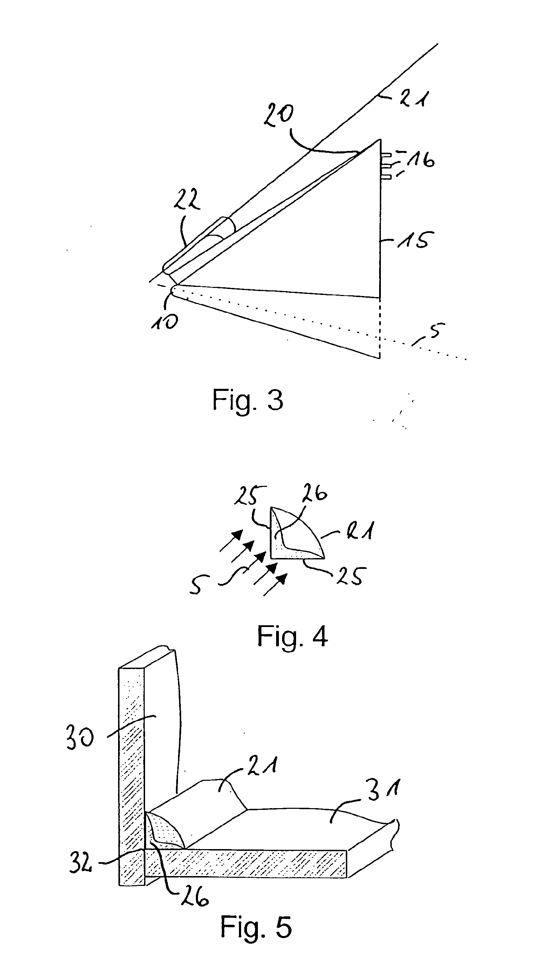

Eine andere Ausführungsform der Arbeitsspitze ist in der Figur 3 veranschaulicht. Die Arbeitsspitze 20 ist für einen stangenförmigen Zusatzwerkstoff 21 eingerichtet. Dieser Zusatzwerkstoff wird allein über eine manuell aufzubringende Zugkraft durch die Führung 22 gezogen und damit nachgeführt. Das Verfahren wird nachfolgend detailliert beschrieben.

Die Figur 4 zeigt den Zusatzwerkstoff 21 in einem Querschnitt. Der Werkstoff 21 weist die Geometrie eines Viertelkreises auf. Der rechte Winkel mit den Schenkeln 25 ist dem Laserstrahl 5 zugewandt. Diese Seite des Werkstoffs 21 wäre also in der Figur 3 nach unten orientiert, während die Viertelrundeoberseite im Bereich der Führung 22 oben liegen würde.

Die Laserstrahlung 5 trifft den Werkstoff 21, so dass er durch Absorption der Infrarotstrahlung etwa in dem schraffierten Bereich 26 soweit erwärmt wird, dass die zur Verarbeitung erforderliche Erweichung oder Verflüssigung auftritt. Mit diesem erwärmten Bereich 26 wird der Werkstoff 21 dann an die zu fügenden Werkstücke angedrückt, was nachfolgend in der Figur 5 beschrieben wird.

Die Figur 5 zeigt zwei Werkstücke 30, 31, die aus einem Kunststoffmaterial hergestellt sind. Die Werkstücke sollen in dem aneinander angrenzenden Bereich bei 32 miteinander verbunden werden. Hierfür wird ein Zusatzwerkstoff 21 in der in Figur 4 veranschaulichten Weise mit einem Laserstrahl erhitzt. Die erhitze Seite des Zusatzwerkstoffs 21 wird in den von den Werkstücken 30, 31 gebildeten rechten Winkel gepresst und verklebt dort mit den beiden Werkstücken. Die Werkstücke 30, 31 sind damit gefügt.

In der Praxis wird das Handgerät gemäß Figur 1 folgendermaßen verwendet:

Aus einem externen Laser wird über den Lichtleiter 1 der Laserstrahl 5 in das Handgerät eingekoppelt. Der Laserstrahl 5 wird dort auf die Öffnung 10 der Arbeitsspitze 3 gerichtet und fokussiert. Der Zusatzwerkstoff 11 wird über den Vorschub 13, 14 und die Öffnung 12 in den Focusbereich des Laserstrahls 5 geführt. Dort wird der Werkstoff erhitzt, bis er die zum Fügen der Werkstücke 2 erforderliche Temperatur aufweist. Gegebenenfalls können die zu fügenden Werkstücke 2 mit einem Teil des Laserstrahls 5 erwärmt werden, um die Fügeverbindung zu erleichtern. Ein in dem Handgerät 1 angeordnetes Fotometer (nicht dargestellt) ermittelt die Werkstoff temperatur im Bereich der Öffnung 10 und regelt die Leistung des Lasers derart, dass eine Überhitzung des Werkstoffs 11 oder des Werkstücks 2 ausgeschlossen ist. Das Handgerät 1 kann dann entlang einer Bearbeitungsbahn mit der Arbeitsspitze 3 über das Werkstück 2 geführt werden, sodass eine Fügeverbindung entlang dieser Bearbeitungsbahn entsteht. Als Anwendungsbeispiel sei das Verschweißen eines Nummernschildhalters mit dem Stoßfänger eines Kraftfahrzeugs genannt. Bei derartigen Fügeverbindungen ist aus Gründen des Recyclings gewünscht, sowohl den Stoßfänger als auch den Nummernschildhalter oder andere Anbauteile aus dem gleichen Werkstoff zu fertigen. Derzeit werden solche Verbindungen entweder geklebt oder geschraubt, was den Einsatz eines zusätzlichen, andersartigen Werkstoffs erfordert. Beim Verschweißen mit der Vorrichtung gemäß Figur 1 kann der Zusatzwerkstoff 11 aus dem gleichen Material bestehen wie die Werkstücke 2 selbst.

Das in dem Handgerät 1 angeordnete Fotometer kann neben der Überwachung der Temperatur an der Fügestelle auch dazu genutzt werden, dem Benutzer eine Information darüber zu vermitteln, ob das Handgerät 1 entlang der Bearbeitungsbahn zu langsam, zu schnell oder mit einer geeigneten Geschwindigkeit geführt wird. Gleichzeitig kann der Vorschub über die Vorschubrollen 13 und 14 derart geregelt werden, dass gerade die richtige Menge Zusatzwerkstoff 11 in die Fügestelle eingespeist wird, sodass insbesondere die richtige Temperatur erzielt wird.

Bei Verwendung einer Arbeitsspitze nach Figur 3 kann der Zusatzwerkstoff gemäß Figur 4 verwendet werden. Dieser Werkstoff 21 zeichnet sich dadurch aus, dass die Laserstrahlung nur den Bereich 26 soweit erwärmt, dass die gewünschten Klebeeigenschaften auftreten. Der Bereich 26 wird dabei pastös oder zähflüssig, während in dem übrigen Bereich des Querschnitts der Werkstoff 21 zumindest zugfest bleibt. Ein solcher Werkstoff 21 kann dann Beaufschlagung mit Laserstrahlung 5 über die Führung 22 manuell in die von den Werkstücken 30 und 31 in Figur 5 gebildete Ecke gedrückt werden. Der Anpressdruck sorgt dabei für eine stoffschlüssige Verbindung zwischen dem Werkstück 30 und dem Werkstoff 21 einerseits sowie zwischen dem Werkstück 31 und dem Werkstoff 21 andererseits. Die Fügeverbindung ist damit hergestellt. Die Nachspeisung des Werkstoffs 21 geschieht allein dadurch, dass das Handgerät 1 mit der Arbeitsspitze entlang der Bearbeitungsbahn verfahren wird und der am Werkstück anhaftende Werkstoff 21 aufgrund seiner noch bestehenden Zugfestigkeit durch die Führung 22 hindurch gezogen wird.

Für die Ausrüstung des Werkstoffs 21 gemäß Figur 4 ist vorgesehen, dass über den gesamten Querschnitt eine gleichmäßige Pigmentierung mit infrarotabsorbierenden Stoffen eingerichtet wird. Die Pigmentierung ist dabei so konzentriert, dass eine bevorzugte Absorption in dem Bereich 26 stattfindet, während der Bereich, der der Laserstrahlung 5 abgewandt ist, eine geringere Erwärmung erfährt.

Ein anderes Material, das als Werkstoff 11, 21 eingesetzt werden kann, besteht aus zwei verschiedenen Komponenten. Ein drahtförmiger Zusatzwerkstoff aus Kunststoff kann dabei so ausgerüstet werden, dass eine erste infrarotabsorbierende Komponente in dem Bereich angeordnet ist, der mit den zu fügenden Werkstücken in Kontakt kommt. Ein zweiter Bereich, der nicht infrarotabsorbierend ist, stellt den dem Werkstück abgewandten Bereich dar. Dieser wird von der Laserstrahlung nicht aufgeschmolzen. Außerdem kann die zweite Komponente des Zusatzwerkstoffs andere Eigenschaften aufweisen wie z.B. eine besondere Farbgestaltung.

Die Querschnittsformen der Zusatzwerkstoffe können weitgehend beliebig sein. Neben dem dargestellten viertelrunden Draht kann auch halbrunder oder ganzrunder Kunststoffdraht zum Einsatz kommen. Auch quadratische oder dreieckige Formen sind möglich.

Eine bevorzugte Ausführungsform sieht vor, dass ein Laser mit einer Wellenlänge von 1,8 µm oder mehr zum Einsatz kommt. Die Wellenlänge ist geeignet, Kunststoffe ohne infrarotabsorbierende Pigmentierung aufzuschmelzen. Mit einem derartigen Laser kann dann die erfindungsgemäße Vorrichtung auch zum Fügen von reinen Kunststoffen ohne die erwähnten Zusätze eingesetzt werden.

Die in soweit beschriebene Vorrichtung kann beispielsweise zum Fügen von zwei Kunststoffbauelementen in der Kraftfahrzeugindustrie verwendet werden, wie dies oben beschrieben wurde. Es ist aber auch möglich, mit dieser Vorrichtung großflächige Folien beispielsweise für LKW-Planen miteinander zu verschweißen, wenn das Material der Folien einen Zusatzwerkstoff 11, 21 erfordert. Andere Anwendungsgebiete sind das Verschweißen von Abdichtbahnen bei der Dachflächenabdichtung, bei denen ebenfalls ein Zusatzwerkstoff zum Einsatz kommen kann.

Hilfreich beim Fügen von Dichtfolien für Dachabdichtungen, insbesondere für Flachdachabdichtungen, können im übrigen vorgefertigte Ecken sein. Diese Ecken können in den Bereich eingesetzt werden, in dem drei Flächen aneinander stoßen. Derartige Eckbereiche sind mit dem Handgerät gemäß Figur 1 nur schwierig zu erreichen. Es ist deshalb vorteilhaft, zunächst vorgefertigte Ecken in diese Bereiche einzusetzen und diese Zusatzwerkstücke dann an ihrem Rand mit den abzudichtenden Folien zu verschweißen oder zu verkleben. Auf diese Weise wird die an sich problematische Abdichtung in Eckbereichen deutlich vereinfacht.

Schließlich ist noch zu erwähnen, dass die verschiedenen Aufsatzspitzen über die Kontakte 16 Steuerinformationen an die Steuerung des Lasers übermitteln, und zwar nicht nur hinsichtlich des Vorschubs der Vorschubrollen 13, 14, sondern auch hinsichtlich des mit den Arbeitsspitzen zu verarbeitenden Materials. Verschiedene Materialien erfordern andere Betriebsparameter. Sofern ein bestimmtes Material des Zusatzwerkstoffs 11, 21 jeweils einer eigenen Arbeitsspitze zugeordnet ist, kann die Übermittlung dieser Parameter über die Kontakte 16 eindeutig erfolgen. Im Fall der "passiven" Arbeitsspitze gem. Fig. 3 können die Kontakte 16 auch rein mechanisch z.B. über ihre Position, Länge oder Dicke eine Indikation der verwendeten Spitze oder des verwendeten Werkstoffs geben.

## Patentansprüche

1. Laserstrahlbearbeitungsvorrichtung zum Fügen von Kunststoffen,
- mit einem Handgerät (1), das ein Gehäuse und eine in dem Gehäuse angeordnete Fokussieroptik (6) umfasst,
- wobei die Fokussieroptik (6) mit Laserstrahlung (5) aus einer externen oder internen Laserstrahlquelle beaufschlagbar ist und diese Laserstrahlung (5) in einen Fügebereich fokussiert, und
- wobei eine Zuführung für einen drahtförmigen Zusatzwerkstoff (11, 21) in den Fügebereich vorgesehen ist, **dadurch gekennzeichnet, dass** das Gehäuse auf der dem Fügebereich zugewandten Seite eine auswechselbare Arbeitsspitze (3) trägt, die eine Austrittsöffnung (10) für die Laserstrahlung (5) aufweist, und dass die Zuführung in die Arbeitsspitze (3) integriert ist.

2. Vorrichtung nach Anspruch 1, **dadurch gekennzeichnet, dass** der Zusatzwerkstoff ein Kunststoffdraht ist, der derart im Bereich der Laserwellenlänge absorbierend ausgestattet ist, dass bei einer Beaufschlagung mit Laserstrahlung von einer Seite her eine Absorption von 80% der Laserstrahlung in der dem Laserstrahl zugewandten Hälfte des Kunststoffdrahtes erfolgt.

3. Vorrichtung nach Anspruch 1, **dadurch gekennzeichnet, dass** der Zusatzwerkstoff ein Kunststoffdraht ist, der derart im Bereich der Laserwellenlänge absorbierend ist, dass er bei einer Beaufschlagung mit Laserstrahlung schmilzt.

4. Vorrichtung nach einem der vorhergehenden Ansprüche, **dadurch gekennzeichnet, dass** eine Regelung der Laserleistung in Abhängigkeit von der Temperatur der Kontaktfläche vorgesehen ist.

5. Vorrichtung nach einem der vorhergehenden Ansprüche, **dadurch gekennzeichnet, dass** die mit der Laserstrahlung beaufschlagte Seite des Zusatzwerkstoffs im Betrieb dem zu fügenden Werkstück zugewandt ist und dort wenigstens eine Kontaktfläche bildet.

6. Vorrichtung nach einem der vorhergehenden Ansprüche, **dadurch gekennzeichnet, dass** der Zusatzwerkstoff im Bereich der Kontaktfläche nach Art eines Heißklebers aufgeschmolzen wird, während der abgewandte Bereich zugfest bleibt.

7. Vorrichtung nach einem der vorhergehenden Ansprüche, **dadurch gekennzeichnet, dass** die Zuführung keinen selbsttätigen Vorschub für den Zusatzwerkstoff aufweist.

8. Vorrichtung nach einem der vorhergehenden Ansprüche, **dadurch gekennzeichnet, dass** die Nachspeisung des Zusatzwerkstoffs durch Adhäsion an dem werkstück einerseits und durch manuellen Zug an dem Handgerät andererseits erfolgt.

9. Vorrichtung nach einem der vorhergehenden Ansprüche 1 bis 6, **dadurch gekennzeichnet, dass** die Nachspeisung des Zusatzwerkstoffs durch eine vorschubeinrichtung automatisch erfolgt.

10. Vorrichtung nach Anspruch 9, **dadurch gekennzeichnet, dass** die Nachspeisung des Zusatzwerkstoffs in Abhängigkeit von der Temperatur des Fügebereichs geregelt ist.

11. Vorrichtung nach einem der vorhergehenden Ansprüche, **dadurch gekennzeichnet, dass** die Arbeitsspitze eine Codierung aufweist, die einem geeigneten Sensormittel an dem Handgerät eine Information über die Art der Arbeitsspitze und/oder die Art des Zusatzwerkstoffs verfügbar macht.

12. Vorrichtung nach einem der vorhergehenden Ansprüche, **dadurch gekennzeichnet, dass** die Arbeitsspitze zugleich als Abschirmung der Laserstrahlung gegenüber der Umwelt wirkt.

13. Vorrichtung nach einem der vorhergehenden Ansprüche, **dadurch gekennzeichnet, dass** in den Laserstrahl ein auf den Fügebereich ausgerichteter sichtbarer Pointer eingemischt ist.

14. Vorrichtung nach einem der vorhergehenden Ansprüche, **dadurch gekennzeichnet, dass** der Laser ein Diodenlaser, ein Nd:YAG-Laser oder ein Laser mit einer Wellenlänge im Wellenlängenbereich 1600 bis 7800 nm ist.

## Claims

1. Laser irradiation treatment device for joining plastic materials,
- with a hand-held device (1), which comprises a housing and a focussing optics (6) disposed inside the housing,
- wherein the focussing optics (6) is exposable to laser irradiation (5) from an external or internal laser irradiation source and focusses this laser irradiation (5) in a joining area, and
- wherein a feeding for a wire-shaped filler material (11, 21) into the joining area is provided, **characterized in that** the housing bears on the side facing the joining area an exchangeable treatment tip (3), which is provided with an outlet (10) for the laser irradiation (5), and that the feeding is incorporated into the treatment tip (3).

2. Device according to claim 1, **characterized in that** the filler material is a plastic wire which is provided with such an absorption in the area of the wave length of the laser, that with an exposure of laser irradiation from one side occurs an absorption of an 80% of the laser irradiation within the half of the plastic wire facing the laser beam.

3. Device according to claim 1, **characterized in that** the filler material is a plastic wire which is provided with such an absorption in the area of the wave length of the laser, that it melts when being exposed to laser irradiation.

4. Device according to any of the preceding claims, **characterized in that** a control of the power of the laser is provided under consideration of the temperature of the contact surface.

5. Device according to any of the preceding claims, **characterized in that** the side of the filler material, which is exposed to the laser irradiation, is facing the work piece to be joined when in operation and forms at least one contact surface in this area.

6. Device according to any of the preceding claims, **characterized in that** the filler material in the area of the contact surface is melted in the kind of a hot glue material, whereas the opposite area remains tensionproof.

7. Device according to any of the preceding claims, **characterized in that** the feeding does not have an automatic forward feed for the filler material.

8. Device according to any of the preceding claims, **characterized in that** the supply of the filler material is realized on the one hand side by adherence at the work piece and on the other hand side by manual pulling at the hand-held device.

9. Device according to any of preceding claims 1 to 6, **characterized in that** the supply of the filler material occurs automatically through a feeding apparatus.

10. Device according to claim 9, **characterized in that** the supply of the filler material is controlled under consideration of the temperature of the joining area.

11. Device according to any of the preceding claims, **characterized in that** the treatment tip disposes a codification, which makes available an information regarding the kind of treatment tip and/or the kind of filler material to a suitable sensor means at the hand-held device.

12. Device according to any of the preceding claims, **characterized in that** the treatment tip serves at a same time as shielding of the laser irradiation from the surrounding.

13. Device according to any of the preceding claims, **characterized in that** a visible pointer directed onto the joining area is mixed into the laser irradiation.

14. Device according to any of the preceding claims, **characterized in that** the laser is a diodelaser, a Nd:YAG-laser or a laser with a wave length in the wave length area from 1600 to 7800 nm.

## Revendications

1. Système d'usinage au faisceau laser pour L'assemblage des plastiques,
- avec un appareil portatif (1) comportant un boîtier dans le quel est disposé un optique de focalisation (6),
- étant donné que, l'optique de focalisation (6), alimenté par des rayonnements laser (5) à partir d'une source de rayonnement laser externe ou interne, il focalise ces faisceaux du rayonnement laser (5) sur une zone d'assemblage, et
- étant donné que, une amenée d'alimentation pour une matière d'apport (11, 21) sous forme de fil, est prévu dans la zone d'assemblage, **caractérisé en ce que** le boîtier porte sur sa face tournée vers la zone d'assemblage, une pointe de travail (3) échangeable, qui présente un orifice de sortie (10) pour les rayonnements laser (5), et **en ce que** l'amenée d'alimentation est intégrée dans la point de travail (3).

2. Dispositif selon revendication 1, **caractérisé en ce que** la matière d'apport est un fil en plastique, qui est tellement doté d'une capacité d'absorption en domaine de longueur d'ondes laser que, lors d'une exposition au rayonnement laser provenant d'un coté quelconque, 80% du rayonnement est absorbé par la partie du fil plastique exposée au faisceau laser.

3. Dispositif selon revendication 1, **caractérisé en ce que** la matière d'apport est un fil en plastique, qui est tellement doté d'une capacité d'absorption en domaine de longueur d'ondes laser qu'il fond lors d'une exposition au rayonnement laser.

4. Dispositif selon l'une des revendications précédentes, **caractérisé en ce que** un réglage d'alimentation en laser est prévu en fonction de la température de la surface de contact.

5. Dispositif selon l'une des revendications précédentes, **caractérisé en ce que** la face de la matière d'apport qui, en état de fonctionnement, est exposé au rayonnement laser, est tournée vers la pièce à joindre et forme ici une surface de contact avec cette dernière.

6. Dispositif selon l'une des revendications précédentes, **caractérisé en ce que** la matière d'apport au niveau de la surface de contact est fondu à la façon d'une colle chaude, alors que la partie détournée reste résistante à la traction.

7. Dispositif selon l'une des revendications précédentes, **caractérisé en ce que** l'amenée d'alimentation ne présente pas un système automatique d'alimentation pour la matière d'apport.

8. Dispositif selon l'une des revendications précédentes, **caractérisé en ce que** la compensation de la matière d'apport s'effectue par adhérence à la pièce à fabriquer d'un cote et par traction manuelle à l'appareil portatif de l'autre.

9. Dispositif selon l'une des revendications précédentes 1 à 6, **caractérisé en ce que** la compensation de la matière d'apport s'effectue à laide d'un dispositif automatique d'alimentation.

10. Dispositif selon revendication 9, **caractérisé en ce que** la compensation da la matière d'apport est réglée en fonction de la température de la zone d'assemblage.

11. Dispositif selon l'une des revendications précédentes, **caractérisé en ce que** la pointe de travail présente un codage qui permet de mettre à la disposition d'un palpeur approprié au niveau de l'appareil portatif, une information sur la nature de la pointe de travail et/ou la nature de la matière d'apport.

12. Dispositif selon l'une des revendications précédentes, **caractérisé en ce que** la pointe de travail agit au même temps comme un blindé de protection contre les rayonnements laser vis-à-vis de l'environnement.

13. Dispositif selon l'une des revendications précédentes, **caractérisé en ce que** le faisceau laser est mêlé d'un pointeur visible qui est braqué sur la zone d'assemblage.

14. Dispositif selon l'une des revendications précédentes, **caractérisé en ce que** le laser est une diode laser, un laser Nd : YAG ou bien un laser avec longueur d'onde située entre 1600 et 7800 nm.
